# EUROPEAN PATENT APPLICATION

(11) **EP 3 923 386 A1**
(43) Date of publication of application: **15.12.2021**
(21) Application number: 19914569.9
(22) Date of filing: 23.12.2019
(51) Int. Cl.: H01M 4/583, H01M 6/14

(54) **GRAPHENE-BASED PRIMARY CHEMICAL CURRENT SOURCE**

(30) Priority: 08.02.2019 RU 2019103623
(71) Applicant: Dudakov, Valerij Borisvich, Moscow, 119330 (RU); Kornilov, Denis Yurevich, g. Mikhajlovsk, 356245 (RU); Geller, Marc Mikhajlovich, 43331 Raanana (IL)
(72) Inventor: GUBIN, Sergey Pavlovich, Moscow, 119071 (RU); TKACHEV, Sergey Viktorovich, Ryazan, 390044 (RU); CHUPROV, Pavel Nikolaevich, Moscow, 117403 (RU); RYCHAGOV, Aleksey Yurevich, Moscow, 127549 (RU); CHEGLAKOV, Andrey Valerevich, Moscow, 119034 (RU); KORNILOV, Denis Yurevich, Shpakovskij r-n, g. Mikhajlovsk, 356245 (RU); GELLER, Marc Mikhajlovich, 43331 Raanana (IL)
(74) Representative: Spengler, Robert
(86) International application number: PCT/RU2019/050254
(87) International publication number: WO 2020/162789

(57) **Abstract**

The invention relates to the field of electrical engineering. The primary chemical current source is a new class of non-rechargeable, energy-saturated chemical current sources based on graphene in the metal-oxidized carbon electrochemical system, in which a nanostructured material based on graphene-like materials is used as a current-forming component of the cathode, which has an increased discharge capacity due to the presence of various oxygen-containing functions, capable of forming irreversible compounds with ions of the active material of the anode (for example, lithium, sodium, magnesium, calcium, potassium) during the current-forming process (discharge). The technical result is an increase in the energy performance of the primary chemical current source.

## Description

### Technical description

The invention is related to electrical engineering and introduces a new class of energy-intensive primary (non-rechargeable) chemical current sources (CPS) based on graphene.

### Related art

Many types of primary chemical current sources are known in the related art (Table 1) (Chemical current sources: Handbook / Edited by N. V. Korovina and A. M. Skundina - M.: MPEI Publishing House, 2003, p. 138), whose main disadvantage is their low specific power capacity of not more than 650Wh/kg, which narrows the field of application of these types of current sources.

A primary chemical current source having a carbon-containing cathode material, a polymonofluorocarbon with the general formula (CF)n (I. A. Kedrinsky et al. Lithium power sources. M., 1992, p. 143).

The disadvantage of this primary chemical current source of the lithium-fluorocarbon (CF)n system is the low energy discharge capacity, not more than 400Wh/kg.Li|LiBr,AH|SO2

### Summary of the invention

The primary chemical current source is a new class of non-rechargeable, energy-saturated chemical current sources based on graphene in the metal-oxidized carbon electrochemical system, in which a nanostructured material based on graphene-like materials is used as a current-forming component of the cathode, which has an increased discharge capacity due to the presence of various oxygen-containing functions, capable of forming irreversible compounds with ions of the active material of the anode (for example, lithium, sodium, magnesium, calcium, potassium) during the current-forming process (discharge).

### Technical challenge

The aim of the invention is to create a primary chemical current source with high specific energy performance. The technical result of the invention is to improve the energy performance of the primary chemical current source.

### Problem solution

The claimed primary chemical current source is a new class of energy-saturated non-rechargeable chemical current sources based on graphene in the metal-oxidized carbon electrochemical system, where a nanostructured material based on graphene-like materials with increased discharge capacity due to the presence of various oxygen-containing ions achieves the specified technical result (discharge).

The specified technical result is achieved by the fact that the primary chemical current source based on graphene consists of a body with at least one anode, at least one cathode, at least one electrolyte, current collectors, and separator installed in it, where a nanostructured material based on graphene-like materials is used as a current-forming component of the cathode according to the invention.

Graphene-like materials can be: graphene, graphene oxide, reduced graphene oxide, graphene fluoride, reduced graphene fluoride, graphene chloride, reduced graphene chloride, graphene bromide, reduced graphene bromide, graphene nitrate, reduced graphene nitrate, graphene sulfate, reduced graphene sulfate, mixture of the listed compounds.

As a graphene-like material, a composite based on one or more of the above compounds using carbon nanotubes; carbon nanotube oxidation products; graphite; graphite oxidation products; carbon quantum dots; carbon quantum dot oxidation products; carbon black; carbon black oxidation products; activated carbon; activated carbon oxidation products may be used.

As graphene-like materials, a composite based on one or more of the above compounds with micro- and nanoparticles of metals, capable of forming an irreversible bond with the ions of the active material of the anode can be used.

Powders with particle sizes ranging from 0.05 to 300 m; gels and aerogels with porosities ranging from 15 to 99.1% or a mixture thereof; films ranging from 0.01 to 500 m thick; fibres ranging from 0.05 to 50 m long and 0.01 to 5 m in diameter; hollow spheres ranging from 0.02 to 200 m in diameter and a sphere wall thickness ranging from 0.002 to 0.04 m, or a mixture thereof

### Brief description of the drawings

Fig. 1 shows a) microphotograph of optical digital microscopy of graphene spheres; b) microphotograph of scanning electron microscopy of a graphene sphere.
Figure 2 shows a) an external view of the reduced graphene oxide film; b) a scanning electron microscopy slice micrograph of the reduced graphene oxide film.
Figure 3 shows a scanning electron microscopy micrograph of tin nanoparticles on the surface of a reduced graphene oxide flake.
Figure 4 shows a scanning electron microscopy micrograph of aerogel graphene microparticles.

### Description of implementation options

The practical feasibility of the claimed invention is demonstrated by the following typical examples.

### Example 1

Highly dispersed composite material based on graphene oxide powders (particle size from 15 to 30 microns) and carbon black (particle size from 25 to 50 microns) in mass ratio is used as current-forming component of the primary chemical current source cathode. % 2:1, which were mixed with a surfactant (dodecyl sulfate, 0.5 g per 1 g of mixture) and water (2 ml) and then dispersed using an ultrasonic unit (USU). The cathode current-forming component was mixed with a binder - sodium carboxymethylcellulose salt (5% wt. to mass of current-forming component), and the resulting paste was applied as a layer 100-300 microns thick on aluminum foil, followed by drying and rolling up to a thickness of 60-180 microns. Next, a 2.5×1.5 cm electrode was cut out. The resulting cathode was incorporated into a standard primary chemical current source assembly in which the electrolyte was a 1M LiPF₆ solution in ethylene carbonate / dimethyl carbonate (1:1) solution, the anode was lithium metal, the separator was a polypropylene film with 30% porosity and a thickness of 15 m, and the body was laminated aluminum. With a discharge current of 0.02 to 0.2 mA in the operating voltage range of 3.5 to 1.5 V, the cell showed a capacity of 6 to 14 mAh, in terms of the mass of the current-forming component of the HIT cathode, the capacity was 400 to 5500 mAh/g.

### Example 2

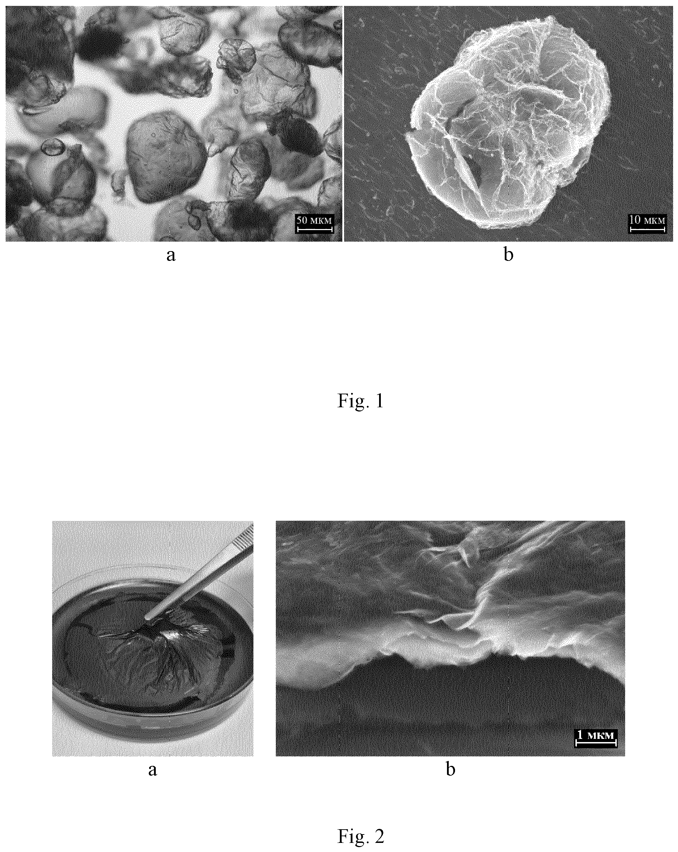

As the principal chemical current source cathode's current-forming component, a powder of hollow graphene spheres (see Fig. 1) with diameters ranging from 10 to 100 m and wall thicknesses ranging from 0.005 to 0.02 m was utilized. Hollow graphene spheres were combined with polyvinylidene fluoride (5% to the mass of current-forming component) pre-dissolved in N-methyl-2-pyrrolidone to make HIT cathodes. The resulting paste was then placed as a layer 100-300 microns thick to aluminum foil, dried, and rolled to a thickness of 60-180 microns. A 2.5×1.5 cm electrode was then cut out. The resulting cathode was incorporated into a standard primary chemical current source assembly in which the electrolyte was a 1M LiPF₆ solution in ethylene carbonate / dimethyl carbonate (1:1) solution, lithium metal served as the anode, the separator was a polypropylene film with a porosity of 30% and a thickness of 15 m, and the body was made of laminated aluminum. The cell had a capacity of 7 to 16 mAh with a discharge current of 0.02 to 0.2 mA in the working voltage range of 3.5 to 1.5 V, and a capacity of 400 to 5500 mAh/g in terms of the mass of the current-carrying component of the HIT cathode.

### Example 3

Reduced graphene oxide sheets (see Fig. 2a) with thicknesses ranging from 0.1 to 1 m were used as the major chemical current source cathode's current-forming component (see Fig. 2b). For the production of HIT, cathode films of reduced graphene oxide were applied on the surface of aluminum foil, followed by heat treatment in hydrogen medium at a temperature of 70 to 180 °C. No binder was used for the production of HIT cathode. A 2.5×1.5 cm electrode was then cut out. The cathode obtained in this manner was incorporated into a standard assembly, a primary chemical current source in which 1M NaClO₄ solution in ethylene carbonate / dimethyl carbonate (1:1) was used as electrolyte, metallic sodium was used as an anode, the separator was a 30 percent porosity and 15 m thick polypropylene film, and the body was made of laminated aluminum. The cell had a capacity of 3 to 9 mAh, with a capacity of 450 to 4800 mAh/g in terms of the mass of the current-forming component of the HIT cathode, with a discharge current of 0.02 to 0.2 mA and an operating voltage range of 3.5 to 1.5 V.

### Example 4

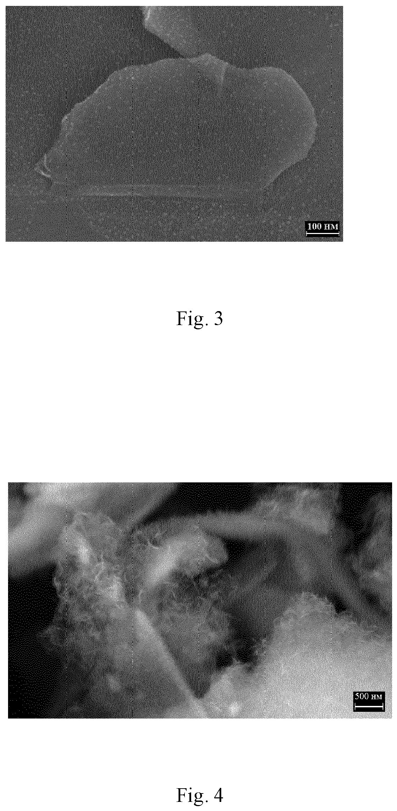

As the principal chemical current source cathode's current-forming component, a highly dispersed composite material based on reduced graphene oxide with tin nanoparticles was utilised. The powder with a particle size of 200 to 250 m was made up of reduced graphene oxide flakes coated with tin nanoparticles with a size of 0.005 to 0.01 m (see Fig. 3). A current-forming component was combined with a polyvinylidene fluoride binder dissolved in N-methyl-2-pyrrolidone (5 percent w/w mass of current-forming component) to make HIT cathode. The paste was put as a layer 100-200 microns thick onto aluminum foil, then heat treated in a hydrogen atmosphere at 70-180 °C and rolled to a thickness of 60-120 microns. A 2.5×1.5 cm electrode was then cut out. The resulting cathode was incorporated into a standard primary chemical current source assembly in which the electrolyte was a 1M LiPF₆ solution in ethylene carbonate / dimethyl carbonate (1:1) solution, lithium metal was used as the anode, the separator was a polypropylene film with 30% porosity and a thickness of 15 m, and the housing was laminated aluminum. The cell demonstrated a capacity of 4 to 16 mAh with a discharge current of 0.01 to 0.1 mA in the working voltage range of 3.5 to 1.5 V, with a capacity of 650 to 5,500 mAh/g in terms of the mass of the current-forming HIT component.

### Example 5

As the current-forming component of the cathode of the primary chemical current source, graphene aerogel microparticles with an average size of 2 m were used (see Fig. 4). A current-forming component was combined with a polyvinylidene fluoride binder dissolved in N-methyl-2-pyrrolidone to make HIT cathode (5% wt. of current-forming component). The paste was put in a layer 100-200 microns thick onto aluminum foil, then dried and rolled to a thickness of 60-120 microns. A 2.5×1.5 cm electrode was then cut out. The resulting cathode was incorporated into a standard primary chemical current source assembly in which the electrolyte was a 1M LiPF₆ solution in ethylene carbonate / dimethyl carbonate (1:1) solution, the anode was lithium metal, the separator was a polypropylene film with 30% porosity and a thickness of 15 m, and the body was laminated aluminum. The cell had a capacity of 9 to 24 mAh with a discharge current of 0.02 to 0.2 mA in the operating voltage range of 3.5 to 1.5 V, and the capacity was 650 to 5500 mAh/g in terms of the mass of the current-forming component.

Thus, the claimed invention's technical result is a primary chemical power source with a high specific energy density of more than 650Wh/kg.

The related art analysis reveals that the claimed combination of key features as set out in the claims is unknown. This leads to the conclusion that the claimed technical solution complies with the patentability condition of "novelty".

The comparative study reveals that no solutions in the previous art have been located that share features with the claimed invention's distinctive features, nor has it been proved that these qualities alter the technological result. Thus, the claimed technical solution satisfies the condition of patentability "inventive step".

**Table 1 - Main primary chemical current sources**

| System | Current-generating reaction | Theoretical specific Wh/kg | Practical specific Wh/kg |
|---|---|---|---|
| Manganese dioxide-zinc | 2MnO₂+Zn+2NH₄CL= 2MnOOH+{Zn(NH₃)₂]Cl₂ | Up to 300 Wh/kg | 50-60 Wh/kg |
| Zn\|NH₄CL\|MnO₂ | | | |
| Zn\|ZnCL₂\|MnO₂ | 2MnO₂+Zn+2H₂O+ZnCL₂= 2MnOOH+2Zn(OH)CL | | |
| Zn\|KOH\|MnO₂ | | | |
| | 2MnO₂+Zn+2H₂O= 2MnOOH+ZN(OH)₂ | | |
| Mercury-zinc oxide Zn\|KOH\|HgO | HgO+Zn=Hg+ZnO | 288 Wh/kg | 135 Wh/kg |
| Silver zinc oxide Zn\|KOH\|Ag₂O | Ag₂O+Zn=2Ag+ZnO | 1344 Wh/kg | |
| Oxygen (air)-zinc | | | |
| Manganese lithium dioxide Li\|LiCLO₄,Πκ\|MnO₂ | MnO₂+Li=LiMnO₂ | 1075 Wh/kg | 190 Wh/kg |
| Fluorocarbon lithium Li\|LiBF₄,PK\|(CF)ₙ | (CF)ₙ+nLi=nLiF=Cₙ | 2100 Wh/kg | 250 Wh/kg |
| Copper-lithium oxide Li\|LiClO₄, DOL\| CuO | CuO+2Li=Cu+Li₂O | 1200 Wh/kg | 300 Wh/kg |
| Silver-lithium chromate Li\|LiAsF₆,PK,DME\|Ag₂CrO₄ | AgCrO₄+Li=Li₂CrO₄+2Ag | 515 Watt/kg | |

| Copper-lithium sulphide | | | |
|---|---|---|---|
| Iron-lithium disulphide Li\|LiClO₄,PKDME\|FeS₂ | FeS₂+4Li=2Li₂S+Fe | 1273 Wh/kg | 260 Wh/kg |
| Iodine-lithium Li\|LiI₂\|I₂,PVD | I₂+2Li=2LiI | 560 Watt/kg | 280 Wh/kg |
| Molybdenum-lithium disulphide | | | |

| Titanium lithium disulphide | | | |
|---|---|---|---|
| Vanadium-lithium oxide | | | |
| Molybdenum-lithium oxide | | | |
| Thionyl chloride lithium Li\|LiAlCl₄,SOCl₂\|SOCL₂ | 2SOCL₂+4Li=S+SO₂+4LiCL | 1405 Wh/kg | 650 Wh/kg |
| Sulphur dioxide-lithium Li\|LiBr,AH\|SO₂ | 2SO₂+2Li=Li₂S₂O₄ | 1175 Wh/kg | 350 Wh/kg |

### Industrial applicability

The preceding information validates the application of the claimed primary chemical current sources based on graphene, indicating that the invention can be used in the field of electrical engineering and thus meets the patentability criteria of "industrial applicability."

## Claims

1. A primary chemical current source consisting of a housing with at least one anode, at least one cathode, at least one electrolyte, current collectors, and a separator, distinguished by the use of a nanostructured material based on graphene-like materials as a cathode current-forming component.

2. Primary chemical current source according to cl. 1, distinguished by the employment of graphene oxide as a graphene-like material.

3. A primary chemical current source according to cl. 1, **characterised in that** graphene fluoride is used as a graphene-like material.

4. According to cl. 1, the primary chemical current source is graphene chloride, which is made from graphene-like materials.

5. A primary chemical current source according to cl. 1, distinguished by the utilization of graphene-like materials as graphene bromide.

6. The primary chemical current source according to cl. 1, **characterised in that** graphene nitrate is used as graphene-like materials.

7. Primary chemical current source according to cl. 1, distinguished by the employment of graphene sulphate as a graphene-like substance.

8. The principal chemical current source defined in cl. 1, in which a mixture of the compounds mentioned in claims 2-7 is used as graphene-like materials.

9. The principal chemical current source described in cl. 1, where a graphene-like material is a composite based on one or more of the compounds indicated in claims 2-7 and carbon nanotubes.

10. The principal chemical current source of cl. 1, distinguished by the utilization of a graphene-like material made from a composite of one or more of the compounds specified in cl. 2-7 and oxidation products of carbon nanotubes.

11. The principal chemical current source described in cl. 1, distinguished by the use of a graphene-like material made from a composite of one or more of the compounds mentioned in cl. 2 to 7.

12. The principal chemical current source of cl. 1, **characterised by** the use of a graphene-like material made from a composite based on one or more of the compounds described in cl. 2 to 7.

13. The primary chemical current source of cl. 1, defined by the use of a graphene-like material made from a composite based on one or more of the carbon quantum dot compounds specified in cl. 2 to 7.

14. The principal chemical current source described in claim 1, **characterized by** the utilization of a graphene-like material made from a composite of one or more of the compounds specified in cl. 2 to 7.

15. The principal chemical current source of cl. 1, distinguished by the use of a graphene-like material made from a composite of one or more of the compounds described in cl. 2 to 7.

16. The principal chemical current source of cl. 1, defined by the use of a graphene-like material made from a composite based on one or more of the compounds described in cl. 2 to 7.

17. The primary chemical current source of cl. 1, distinguished by the use of graphene-like materials made from a composite of one or more of the compounds described in cl. 2 to 7.

18. The principal chemical current source of cl. 1, **characterised by** the use of a graphene-like material made from a composite based on one or more of the chemicals described in cl. 2 to 7.

19. The primary chemical current source of cl. 1, **characterized by** the nanostructured material being used in the form of: a powder with a particle size of 0.05 to 300 m; gels and aerogels with a porosity of 15 to 99.1% or a mixture thereof; a film with a thickness of 0.01 to 500 m; fibers with a length of 0.05 to 50 m and a diameter of 0.01 to 5 m; a hollow sphere with a diameter of 0.02 to 200 m and a wall thickness of 0.002 to 0.04 m, or a mixture of them.
